# EUROPEAN PATENT APPLICATION

(11) **EP 2 555 113 A1**
(43) Date of publication of application: **06.02.2013**
(21) Application number: 12150834.5
(22) Date of filing: 11.01.2012
(51) Int. Cl.: G06F 11/07

(54) **Image Forming Apparatus, Method For Notifying Error, And Computer-Readable Recording Medium**

(30) Priority: 03.08.2011 KR 20110077352
(71) Applicant: Samsung Electronics Co., Ltd., Suwon-si, Gyeonggi-do, 443-742 (KR)
(72) Inventor: Lee, Sang-jin, Gyeonggi-do (KR)
(74) Representative: Davies, Robert Ean

(57) **Abstract**

An image forming apparatus includes a storage unit to store correlation information between a type of error that occurs in the image forming apparatus and user information, an error detection unit to detect an error of the image forming apparatus, a search unit to search for user information corresponding to the detected type of error according to the correlation information, and a notification unit to notify an occurrence of the error using the searched user information.

## Description

### BACKGROUND OF THE INVENTION

### 1. Field of the Invention

The present general inventive concept generally relates to an image forming apparatus, a method for notifying an error, and a computer-readable recording medium therefor, and more particularly, to an image forming apparatus which can notify an error occurring therein effectively, a method of notifying an error, and a computer-readable recording medium therefor.

### 2. Description of the Related Art

In general, an image forming apparatus refers to an apparatus that prints printing data generated in a terminal apparatus, such as a computer, on recording paper. Examples of such an image forming apparatus are copiers, printers, facsimile machines, or multifunction peripherals (MFP)performing two or more functions of the aforementioned devices in a single device.

Recently, a business-to-business (B2B) market in which a printer management solution provider manages image forming apparatuses of public offices, universities, companies, etc., is developing. In such a B2B market, a user and an administrator of the image forming apparatus are separated from each other. Therefore, the necessity to recognize an error occurring in the image forming apparatus effectively and respond to the error is increasing.

In particular, actively recognizing the error occurring in the image forming apparatus and responding to the error improves user's convenience and increases a quality of a service provider.

However, since a related-art image forming apparatus notifies an error through only a pre-set email, an operation of setting an email address of a user or an administrator to be notified is required, and, since the error is notified to a pre-set email address regardless of the type of error, there is a problem in that even a user which cannot respond to the error appropriately receives the mail.

### SUMMARY OF THE INVENTION

The present general inventive concept provides an image forming apparatus which notifies an error occurring therein effectively, a method of notifying an error, and a computer-readable recording medium therefor.

Additional embodiments of the present general inventive concept will be set forth in part in the description which follows and, in part, will be obvious from the description, or may be learned by practice of the general inventive concept.

The foregoing and/or other features and utilities of the present general inventive concept may be achieved by providing an image forming apparatus including a storage unit to store correlation information between a type of error that occurs in the image forming apparatus and user information, an error detection unit to detect an error of the image forming apparatus, a search unit to search for user information corresponding to the detected type of error according to the correlation information, and a notification unit to notify an occurrence of the error using the searched user information.

The storage unit may store a first lookup table in which the user information is recorded according to a grade and a second lookup table in which a type of error matched with the grade is recorded.

The first lookup table may be a list of addresses.

The storage unit may store a third lookup table in which the user information is recorded according to job authority and a fourth lookup table in which a type of error matched with the job authority is recorded.

The storage unit may store a fifth lookup table in which a type of error matched with a user is recorded.

The notification unit may notify at least one of information on the image forming apparatus, the detected type of error, a solution to the detected error, and contact information of an administrator.

The user information may include a mail address, and the notification unit may notify the occurrence of the error to a mail address of the searched user information.

The user information may include a phone number, and the notification unit may notify the occurrence of the error to a phone number of the searched user information.

The user information may include a messenger ID, and the notification unit may notify the occurrence of the error to a messenger ID of the searched user information.

The foregoing and/or other features and utilities of the present general inventive concept may also be achieved by providing a method of notifying an error of an image forming apparatus, the method including detecting an error of the image forming apparatus, searching for user information corresponding to the detected type of error according to correlation information between a type of error that occurs in the image forming apparatus and user information, and notifying an occurrence of the error using the searched user information.

The correlation information may be a first lookup table in which the user information is recorded according to a grade and a second lookup table in which a type of error matched with the grade is recorded.

The first lookup table may be a list of addresses.

The correlation information may be a third lookup table in which the user information is recorded according to job authority and a fourth lookup table in which a type of error matched with the job authority is recorded.

The correlation information may be a fifth lookup table in which a type of error matched with a user is recorded.

The notifying may include notifying at least one of information on the image forming apparatus, the detected type of error, a solution to the detected error, and contact information of an administrator.

The user information may include a mail address, and the notifying may include notifying the occurrence of the error to a mail address of the searched user information.

The user information may include a phone number, and the notifying may include notifying the occurrence of the error to a phone number of the searched user information.

The user information may include a messenger ID, and the notifying may include notifying the occurrence of the error to a messenger ID of the searched user information.

The foregoing and/or other features and utilities of the present general inventive concept may also be achieved by providing a computer-readable recording medium including a program to execute a method of notifying an error, the method including detecting an error of an image forming apparatus, searching for user information corresponding to the detected type of error according to correlation information between a type of error that occurs in the image forming apparatus and user information, and notifying an occurrence of the error using the searched user information.

The foregoing and/or other features and utilities of the present general inventive concept may also be achieved by providing an image forming apparatus having a printing unit, the image forming apparatus including an error detection unit configured to detect an error of the image forming apparatus, and a notification unit configured to notify an occurrence of the error to at least one selected from a plurality of users according to a selected one of a plurality of communication methods corresponding to the respective users.

According to the present invention there is provided an apparatus and method as set forth in the appended claims. Other features of the invention will be apparent from the dependent claims, and the description which follows.

### BRIEF DESCRIPTION OF THE DRAWINGS

These and/or other embodiments of the present general inventive concept will become apparent and more readily appreciated from the following description of the embodiments, taken in conjunction with the accompanying drawings of which:
FIG. 1 is a block diagram illustrating a detailed configuration of an image forming apparatus according to an exemplary embodiment of the present general inventive concept;
FIG. 2 is a view illustrating an example of a first lookup table according to an exemplary embodiment of the present general inventive concept;
FIG. 3 is a view illustrating an example of a second lookup table according to an exemplary embodiment of the present general inventive concept;
FIG. 4 is a view illustrating an example of a third lookup table according to an exemplary embodiment of the present general inventive concept;
FIG. 5 is a view illustrating an example of a fourth lookup table according to an exemplary embodiment of the present general inventive concept;
FIG. 6 is a view illustrating an example of a fifth lookup table according to an exemplary embodiment of the present general inventive concept;
FIG. 7 is a flowchart illustrating an operation of activating a method of notifying an error according to an exemplary embodiment of the present general inventive concept; and
FIG. 8 is a flowchart illustrating a method of notifying an error according to an exemplary embodiment of the present general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to like elements throughout. The embodiments are described below in order to explain the present general inventive concept by referring to the figures.

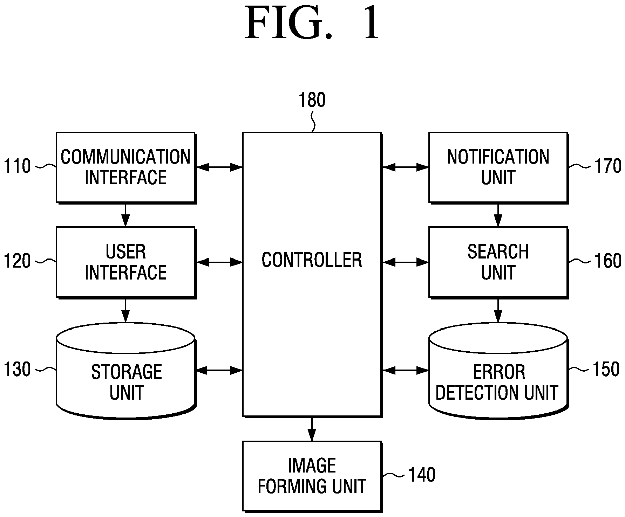

FIG. 1 is a block diagram illustrating a detailed configuration of an image forming apparatus 100 according to an exemplary embodiment of the present general inventive concept.

Referring to FIG. 1, the image forming apparatus 100 includes a communication interface 110, a user interface 120, a storage unit 130, an image forming unit 140, an error detection unit 150, a search unit 160, a notification unit 170, and a controller 180. The image forming apparatus 100 may be a copier, a printer, a facsimile machine or a multi function peripheral (MPF) performing two or more functions of the aforementioned devices in a single device.

The communication interface 110 is connected to a printing control terminal apparatus (not illustrated) and receives printing data from the printing control terminal apparatus. The communication interface 110 is provided to connect the image forming apparatus 100 to an external apparatus and may be configured by a serial port, a universal serial bus (USB) port, or a wireless port to perform a wired or wireless communication.

The communication interface 110 may receive a list of addresses to be used in the image forming apparatus 100 from the printing control terminal apparatus. The list of addresses recited herein is a lookup table which stores names, identifications (IDs), addresses, phone numbers, email addresses, and messenger IDs of users. The list of addresses according to the exemplary embodiment may be stored along with users' respective grades or job authority information.

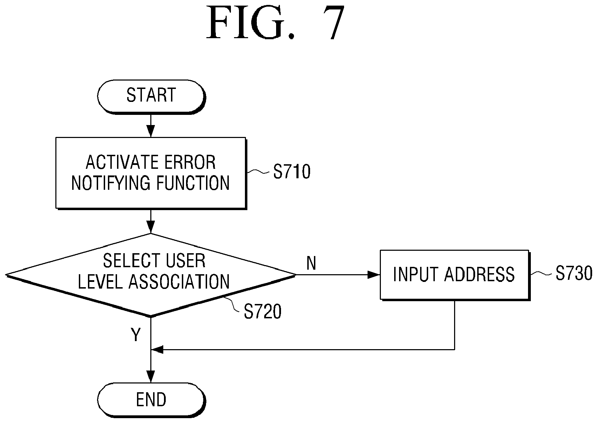

The user interface 120 may include a plurality of function keys through which the user sets or selects various functions supported by the image forming apparatus 100, and displays diverse information provided by the image forming apparatus 100. The user interface 120 may be realized by a device simultaneously implanting input and output such as a touch pad, or may be realized by a device combining a mouse and a monitor. The user may edit the list of addresses pre-stored in the storage unit 130 through a user interface window provided by the user interface 120. Also, the user may input an activation command on whether an error notifying method of the present general inventive concept will be performed or not through the user interface window provided by the user interface 120. This will be explained in detail later with reference to FIG. 7.

The user interface 120 displays an error. When an error is detected by the error detection unit 150, which will be described in detail later, the user interface 120 may display information of the detected error on a screen thereof. At this time, the user interface 120 may display a type of error along with a solution corresponding to the error. The solution may be a plurality of solutions corresponding to the respective errors, and at least one of the solutions may be selected according to the type of error.

The storage unit 130 may store printing data. More specifically, the storage unit 130 may store the printing data received through the communication interface 110 described above. The storage unit 130 may be realized by a storage medium in the image forming apparatus 100, or may be realized by an external storage medium, a removable disk including a USB memory, or a web server over a network.

The storage unit 130 stores the list of addresses. The list of addresses may be edited through the user interface 120 or may be edited by an external apparatus through the communication interface 110.

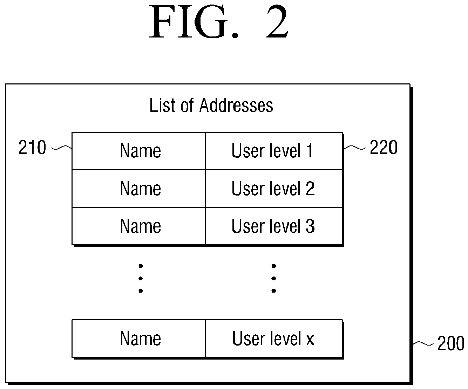

The storage unit 130 stores correlation information between the user information and the type of error that may occur in the image forming apparatus. The storage unit 130 may store a first lookup table in which user information is recorded according to a grade and a second lookup table in which a type of error matched with the grade is recorded, may store a third lookup table in which user information is recorded according to job authority and a fourth lookup table in which a type of error matched with the job authority is recorded, or may store a fifth lookup table in which a types of error matched with a user is recorded. The first lookup table and the third lookup table may be a general list of addresses as described above. Examples of the information stored in each lookup table will be described later with reference to FIGS. 2 to 6.

The storage unit 130 may store information on the image forming apparatus 100. The storage unit 130 may store a model name, an IP address, and a serial number of the image forming apparatus 100.

Also, the storage unit 130 may store information on an error that may occur in the image forming apparatus 100. The information on the error may include information on a type of error that may occur in the image forming apparatus 100 and a solution to the error. The storage unit 130 may pre-store a voice message corresponding to the error. The storage unit 130 may pre-store a short message service (SMS), fax data, and email contents corresponding to each error. The storage unit 130 may store information corresponding to a plurality of respective communication methods and/or respective errors such that the information can be sent or transmitted to the corresponding user according to the stored information corresponding to the communication method, the error, and/or other related information.

The image forming unit 140 performs a printing function. The image forming unit 140 may perform printing with respect to the printing data received from the printing control terminal apparatus (not illustrated).

The error detection unit 150 detects an error of the image forming apparatus 100. The error detection unit 150 may detect an error that may occur in the image forming apparatus, such as 'no paper,' 'paper jam,' 'low toner,' 'cover open,' and an 'error in fuser temperature.' Since the image forming apparatus includes a plurality of units, such as circuits, mechanical elements, consumables, and so on, to perform a function thereof, the error may occur in at least one of the units thereof.

The search unit 160 searches user information corresponding to the detected type of error according to the correlation information. A detailed operation of the search unit 160 will be explained below with reference to FIGS. 2 to 6.

The notification unit 170 notifies the occurrence of the error using the searched user information. If the user information includes a mail address, the notification unit 170 may notify the occurrence of the error to the mail address of the user information. The email to be transmitted may include information on the image forming apparatus in which the error has occurred or detected, the type of error detected, a solution corresponding to the detected error, and contact information of an administrator. The notification unit 170 may transmit the email using an internal web server capable of emailing or may transmit the email using an external emailing sever.

If the user information includes a phone number, the notification unit 170 may notify the occurrence of the error to the phone number of the user information. The notification unit 170 may transmit the occurrence of the error using the SMS or may directly call and reproduce a voice message pre-stored and corresponding to the error. Also, if the pre-stored phone number is a fax number, the notification unit 170 may fax the information on the error as emailing. Also, the notification unit 170 may notify the occurrence of the error to a phone number of a user searched using an internal SMS sending module or an internal fax module, or may notify the occurrence of the error to a phone number searched using an external message sending server or an external faxing server.

If the user information includes a messenger ID, the notification unit 170 may notify the occurrence of the error to the messenger ID of the user information. The notification unit 170 may notify the occurrence of the error according to a service scheme supported by a corresponding messenger. For example, if the messenger supports a dialog function, the occurrence of the error may be notified in the form of a dialog message, and, if the messenger supports a slip of paper, the occurrence of the error may be notified in the form of a slip of paper. If the messenger supports a voice call, a voice message pre-stored and corresponding to the error may be transmitted.

Also, the notification unit 170 may notify the occurrence of the error according to a pre-set notifying method. If an error occurs, the notification unit 170 may notify the occurrence of the error in one of the above-described notifying methods that is already determined by an administrator or a user. In this case, the already determined notifying method may be one notifying method or a plurality of notifying methods having priorities. For example, the priority may be set in order of the emailing method, the short message notifying method, and the messenger notifying method. In this case, if the user information includes an email address, the occurrence of the error is notified to the email address, and if the user information does not include an email address and includes a phone number, the occurrence of the error is notified in the form of a short message.

Also, the notification unit 170 may notify the occurrence of the error in combination of the aforementioned notifying methods or in all of the notifying methods, instead of using only one notifying method.

Also, the notification unit 170 may notify the error in a different notifying method according to the type of error. For example, if an urgent action needs to be taken to respond to the error (for example, as in the case of 'paper jam'), the SMS notifying method is performed, and, if an urgent action is not needed (for example, as in the case of 'low toner'), the emailing method is performed. The notification unit 170 may perform the above-described notifying operation through the communication interface 110. The communication interface 110 may include one or more function units to perform the notifying operation according to the communication methods and/or may communicate with the external apparatus to perform the notifying operation using the selected communication method.

The controller 180 controls the components of the image forming apparatus 100. More specifically, the controller 180 controls the error detection unit 150 to detect whether an error occurs while the image forming apparatus 100 is driving. If an error is detected by the error detection unit 150, the controller 180 controls the search unit 160 to search user information according to the detected type of error, and controls the notification unit 170 to notify information on the error according to a pre-set method.

According to the exemplary embodiment described above, if the error occurs, the image forming apparatus 100 notifies the error to the user who is involved in the error and thus can take an action to respond to the error more swiftly.

Although the present general inventive concept is applied to the image forming apparatus including the image forming unit 140 in the embodiment of FIG. 1, the present general inventive concept may be applied to an image reading-out apparatus including a scan unit.

FIG. 2 is a view illustrating an example of a first lookup table 200 according to an embodiment of the present general inventive concept.

Referring to FIG. 2, the first lookup table 200 may record user information according to one or more grades. The first lookup table 200 includes a first area 210 which stores basic information on users such as users' name, ID, phone number, and email address, and a second area 220 which stores the grades corresponding to the respective users. The users' grades have grades 'level 1,' 'level 2,' 'level 3,' and so on, and indicate whether the user is a general user, an administrator of the image forming apparatus, a staff member in a computing department, or a service engineer. The first lookup table 200 is a general list of addresses. Although separate grades are given to the list of addresses in this embodiment, the grade may be a user's position or department name included in the general list of addresses.

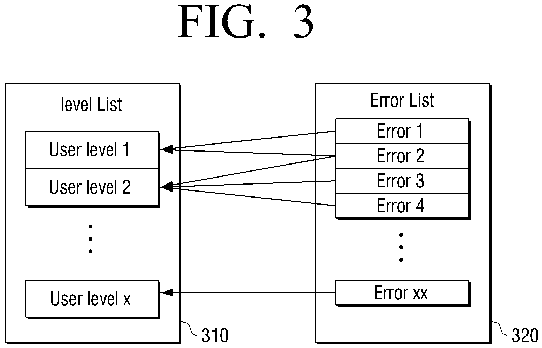

FIG. 3 is a view illustrating an example of a second lookup table 300 according to an embodiment of the present general inventive concept.

Referring to FIG. 3, the second lookup table 300 may record a type of error matched with the grade. For example, user grade 1 (level 1) is matched with errors 1 and 2, and user grade 2 (level 2) is matched with errors 2, 3, and 4.

Accordingly, if error 1 is detected by the error detection unit 150, the search unit 160 searches for user information corresponding to the user grade 1 matched with the error 1.

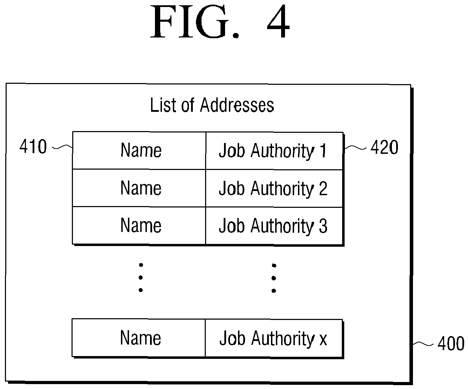

FIG. 4 is a view illustrating an example of a third lookup table 400 according to an embodiment of the present general inventive concept.

Referring to FIG. 4, the third lookup table 400 may record user information according to one or more job authorities. The third lookup table 400 includes a first area 410 which stores basic information on users such as user's name, ID, phone number, and email address, and a second area 420 which stores users' respective job authorities. The job authorities can be divided into job authority 1, job authority 2, job authority 3, and so on, as illustrated in FIG. 4. The job authority refers to authority that the corresponding user has to perform a job of the image forming apparatus. For example, if the image forming apparatus has a printing function, a copying function, a scanning function, and a faxing function, job authority 1 is authority to perform all of the functions of the image forming apparatus, job authority 2 is authority to perform only the copying function, and job authority 3 is authority to perform only the printing function and the copying function.

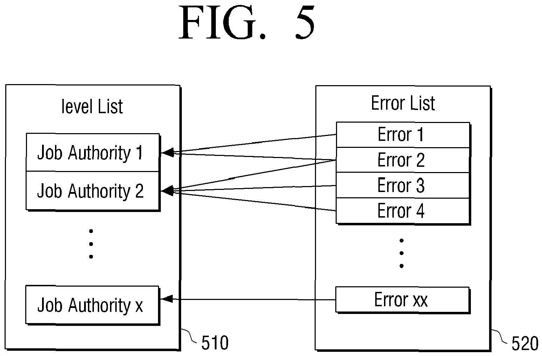

FIG. 5 is a view illustrating an example of a fourth lookup table 500 according to an embodiment of the present general inventive concept.

Referring to FIG. 5, the fourth lookup table 500 may record a type of error matched with the job authority. For example, job authority 1 (level 1) is matched with errors 1 and 2, and job authority 2 (level 2) is matched with errors 2, 3, and 4.

Accordingly, if error 1 is detected by the error detection unit 150, the search unit 160 searches for user information corresponding to job authority 1 matched with error 1.

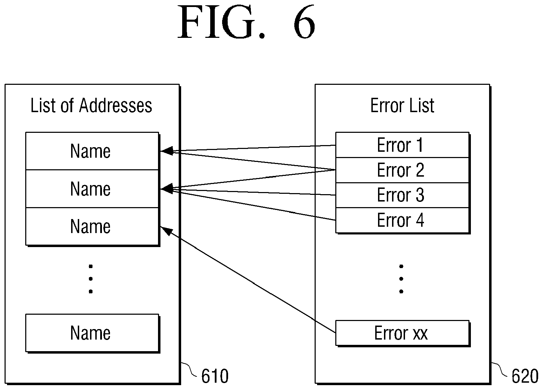

FIG. 6 is a view illustrating an example of a fifth lookup table 600 according to an embodiment of the present general inventive concept..

Referring to FIG. 6, the fifth lookup table 600 may record a type of error matched with a user. For example, user 1 is matched with errors 1 and 2, and user 2 is matched with errors 2, 3, and 4.

Accordingly, if error 1 is detected by the error detection unit 150, the search unit 160 may search for the user 1 matched with error 1.

FIG. 7 is a flowchart illustrating an operation of activating an error notifying method according to an exemplar embodiment of the present general inventive concept.

Referring to FIG. 7, a user inputs a command to activate an error notifying function to the image forming apparatus, when an error occurs at operation S710. This command may be input through the user interface 120 described above or may be input from an external printing control terminal apparatus through the communication interface 110.

If the user activates the error notifying function, selection as to whether the function will be performed in association with a user level as in the present general inventive concept is received at operation S720. If the user does not select the user level association as in the present general inventive concept, user information based on which an error message is transmitted is input at operation S730. If an error occurs in the case that the user level association is not selected, the occurrence of the error is notified to the same user regardless of the type of error.

On the other hand, if the user selects the user level association, the search unit 160 searches for the user information corresponding to the error as described above. A detailed error notifying method will be explained in detail with reference to FIG .8.

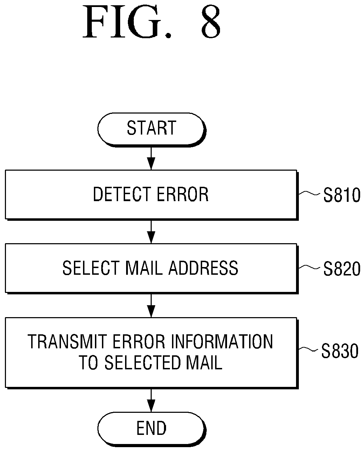

FIG. 8 is a flowchart illustrating a method of notifying an error according to an exemplary embodiment of the present general inventive concept.

Referring to FIG. 8, an error of the image forming apparatus is detected at operation S810. More specifically, an error that may occur in the image forming apparatus such as 'no paper,' 'papar jam,' 'low toner,' 'cover open,' and an 'error in fuser temperature' may be detected.

If the error is detected, user information corresponding to the detected type of error is searched according to correlation information between the type of error that may occur in the image forming apparatus and the user information at operation S820. The operation of searching the user information has been described above with reference to FIGS. 2 to 6.

Using the searched user information, the occurrence of the error is notified at operation S830. If the user information includes a mail address, the occurrence of the error may be notified to the mail address of the user information. If the user information includes a phone number, the occurrence of the error may be notified to the phone number of the user information. If the user information includes a messenger ID, the occurrence of the error may be notified to the messenger ID of the user information.

The error notifying method according to the exemplary embodiment notifies the occurrence of the error to the user who is involved in the error, when the error occurs, and thus can take an action to respond to the error occurring in the image forming apparatus more swiftly and more effectively. The error notifying method of FIG. 8 may be executed in the image forming apparatus having the configuration of FIG. 1 and may be executed in an image forming apparatus having any other configuration.

The error notifying method of FIG. 8 may be realized by at least one execution program for executing the above-described error notifying method, and the execution program may be stored in a computer-readable recording medium.

Accordingly, the blocks of the present general inventive concept may be executed as a computer-recordable code on the computer-readable recording medium. The computer-readable recording medium may be a device that can store data readable by a computer system.

For example, the computer-readable recording medium may be a video display apparatus such as a television including a read only memory (ROM), a random access memory (RAM), a CD-ROM, a magnetic tape, a floppy disk, an optical disk, an optical data storage device, and a storage device. Also, the computer-recordable code may be executed by a computer data signal of a carrier wave.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image forming apparatus comprising:
a storage unit to store correlation information between a type of error that occurs in the image forming apparatus and user information;
an error detection unit to detect an error of the image forming apparatus;
a search unit to search for user information corresponding to the detected type of error according to the correlation information; and
a notification unit to notify an occurrence of the error using the searched user information.

2. The image forming apparatus as claimed in claim 1, wherein:
the storage unit stores a first lookup table in which the user information is recorded according to a grade and a second lookup table in which a type of error matched with the grade is recorded; and
the first lookup table is a list of addresses.

3. The image forming apparatus as claimed in claim 1, wherein the storage unit stores a third lookup table in which the user information is recorded according to job authority and a fourth lookup table in which a type of error matched with the job authority is recorded.

4. The image forming apparatus as claimed in claim 1, wherein the storage unit stores a fifth lookup table in which a type of error matched with a user is recorded.

5. The image forming apparatus as claimed in any one of claims 1 to 4, wherein the notification unit notifies at least one of information on the image forming apparatus, the detected type of error, a solution corresponding to the detected error, and contact information of an administrator.

6. The image forming apparatus as claimed in any one of claims 1 to 5, wherein:
the user information comprises a mail address; and
the notification unit notifies the occurrence of the error to a mail address of the searched user information.

7. The image forming apparatus as claimed in any one of claims 1 to 6, wherein:
the user information comprises a phone number; and
the notification unit notifies the occurrence of the error to a phone number of the searched user information.

8. The image forming apparatus as claimed in any one of claims 1 to 7, wherein:
the user information comprises a messenger ID; and
the notification unit notifies the occurrence of the error to a messenger ID of the searched user information.

9. A method of notifying an error of an image forming apparatus, the method comprising:
detecting an error of the image forming apparatus;
searching for user information corresponding to the detected type of error according to correlation information between a type of error that occurs in the image forming apparatus and user information; and
notifying an occurrence of the error using the searched user information.

10. The method as claimed in claim 9, wherein:
the correlation information is a first lookup table in which the user information is recorded according to a grade and a second lookup table in which a type of error matched with the grade is recorded; and
the first lookup table is a list of addresses.

11. The method as claimed in claim 9, wherein the correlation information is a third lookup table in which the user information is recorded according to job authority and a fourth lookup table in which a type of error matched with the job authority is recorded.

12. The method as claimed in claim 9, wherein the correlation information is a fifth lookup table in which a type of error matched with a user is recorded.

13. The method as claimed in any one of claims 9 to 12, wherein the notifying comprises notifying at least one of information on the image forming apparatus, the detected type of error, a solution corresponding to the detected error, and contact information of an administrator.

14. The method as claimed in any one of claim 9 to 13, wherein:
the user information comprises a mail address; and
wherein the notifying comprises notifying the occurrence of the error to a mail address of the searched user information.

15. The method as claimed in any one of claims 9 to 14, wherein:
the user information comprises a phone number; and
the notifying comprises notifying the occurrence of the error to a phone number of the searched user information.
